# EUROPÄISCHE PATENTANMELDUNG

(11) **EP 2 803 636 A1**
(43) Veröffentlichungstag der Anmeldung: **19.11.2014**
(21) Anmeldenummer: 14168004.1
(22) Anmeldetag: 13.05.2014
(51) Int. Cl.: C01B 13/02

(54) **Verfahren zur Herstellung von Sauerstoff**

(30) Priorität: 17.05.2013 AT 503312013
(71) Anmelder: Köck, Herbert, 9330 Althofen (AT)
(72) Erfinder: Köck, Herbert, 9330 Althofen (AT)
(74) Vertreter: Müllner, Martin

(57) **Zusammenfassung**

Bei dem Verfahren zur Herstellung von Sauerstoff wird eine PSA-Stufe (Druckwechsel-Adsorptionsstufe) oder eine VPSA-Stufe (Vakuum-Druckwechsel-Adsorptionsstufe) von einem Membranfilter gefolgt. Zur Herstellung von Sauerstoff mit mindestens 99%, vorzugsweise mindestens 99,5% Reinheit ist vorgesehen, dass zunächst mit der PSA- bzw. VPSA-Stufe Sauerstoff mit einer Reinheit von mindestens 96%, vorzugsweise mindestens 97% erzeugt und in nur einem Membranfilter weiter gereinigt wird, wobei der Druck zum Speisen des Membranfilters von der PSA- bzw. VPSA-Stufe stammt. Es ist somit keine zusätzliche Pumpe zum Betreiben des Membranfilters notwendig.

## Beschreibung

### Technisches Gebiet

Die vorliegende Erfindung betrifft ein Verfahren zur Herstellung von Sauerstoff, wobei eine PSA-Stufe (Druckwechsel-Adsorptionsstufe) oder eine VPSA-Stufe (Vakuum-Druckwechsel-Adsorptionsstufe) von einem Membranfilter gefolgt wird.

### Stand der Technik

Solch ein Verfahren ist aus der EP 858826 A bekannt. Nach der Druckwechseladsorptionsstufe ist ein Kompressor vorgesehen, der den Sauerstoff mit einer Reinheit von etwa 92% einem ersten Membranfilter zuführt. Nach dem ersten Membranfilter erhält man eine Reinheit von ca. 95%. Das Permeat des ersten Membranfilters wird vorzugsweise über einen weiteren Kompressor einem zweiten Membranfilter zugeführt, wodurch die Reinheit auf etwa 98% erhöht wird.

Nachteilig dabei ist, dass zwei Membranfilter und zumindest ein, vorzugsweise zwei Kompressoren notwendig sind, und dass dennoch nur eine Reinheit von 98% erreicht wird.

### Kurzbeschreibung der Erfindung

Es ist Aufgabe der vorliegenden Erfindung, ein Verfahren zu schaffen, das einfacher durchzuführen ist und mit dem eine Reinheit von mindestens 99%, vorzugsweise mindestens 99,5% erreichbar ist.

Diese Aufgabe wird durch ein Verfahren der eingangs genannten Art erfindungsgemäß dadurch gelöst, dass mit der PSA- bzw. VPSA-Stufe Sauerstoff mit einer Reinheit von mindestens 96%, vorzugsweise mindestens 97% erzeugt und in nur einem Membranfilter weiter gereinigt wird, wobei der Druck zum Speisen des Membranfilters von der PSA- bzw. VPSA-Stufe stammt.

Erfindungsgemäß wird also die PSA- bzw. VPSA-Stufe so betrieben, dass diese bereits eine Reinheit von 96% oder 97% liefert. In diesem Fall genügt danach ein Membranfilter, um die gewünschte Reinheit von 99% oder 99,5% zu bekommen, und dieses eine Membranfilter kann man mit dem Druck, der von der PSA- bzw. VPSA-Stufe stammt, speisen, sodass also kein Kompressor zwischen der PSA- bzw. VPSA-Stufe notwendig ist.

Vorzugsweise wird bei der Druckwechsel-Adsorptionsstufe jeder Festbettreaktor zunächst mit dem Abgas des anderen Festbettreaktors beschickt, bis Druckausgleich herrscht, wonach der eine Festbettreaktor weiter mit Luft beschickt wird und das verbleibende Abgas des anderen Festbettreaktors abgelassen wird. Auf diese Weise wird nicht nur weniger Druckluft zum Beschicken des einen Festbettreaktors benötigt, es befindet sich nach dem Beschicken auch bereits mehr Sauerstoffanteil im Festbettreaktor als in normaler Luft. Dies erhöht die Sauerstoffreinheit am Ausgang.

Bei einer bevorzugten Ausführungsform werden in den Zeitintervallen, in denen die PSA- bzw. VPSA-Stufe Sauerstoff liefert, der Permeatausgang und der Retentatausgang des Membranfilters abwechselnd freigeschaltet. In den Zeiten, wo der Retentatausgang freigeschaltet wird, wird der Membranfilter mit frischem Sauerstoff aus der PSA- bzw. VPSA-Stufe gefüllt. Danach, wenn der Permeatausgang freigeschaltet wird, baut sich Druck auf und Sauerstoff diffundiert durch Membrane, wodurch der Sauerstoffgehalt vor der Membrane sinkt. Durch sinkenden Sauerstoffanteil steigt dann der Anteil der Verunreinigungen im Permeat, deshalb wird dann wieder der Retentatausgang freigeschaltet und der Permeatausgang blockiert. Grundsätzlich wäre es denkbar, nur den Retentatausgang freizuschalten bzw. zu blockieren und am Permeatausgang ein Rückschlagventil vorzusehen; dies würde aber die gewonnene Gasmenge reduzieren, weil ein Rückschlagventil immer erst nach einer kurzen Verzögerung anspricht. Es ist daher günstiger, beide Ausgänge aktiv zu anzusteuern.

Schließlich ist es zweckmäßig, wenn der Sauerstoffgehalt nach dem Permeatausgang gemessen wird und das Permeat bei Erreichen oder Überschreiten eines vorgegebenen Grenzwertes in einen Sammelbehälter geleitet wird und bei Unterschreiten des vorgegebenen Grenzwertes verworfen wird. Insbesondere beim Hochfahren der Anlage wird der vorgegebene Grenzwert meist nicht erreicht; damit nun immer nur Sauerstoff der gewünschten Reinheit abgegeben wird, sind diese Maßnahmen vorgesehen.

### Kurze Beschreibung der Zeichnungsfiguren

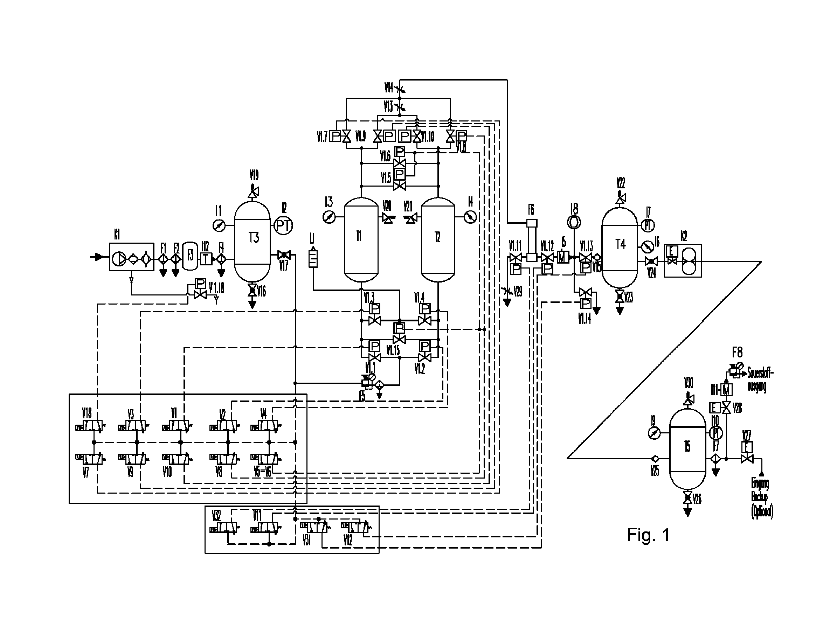

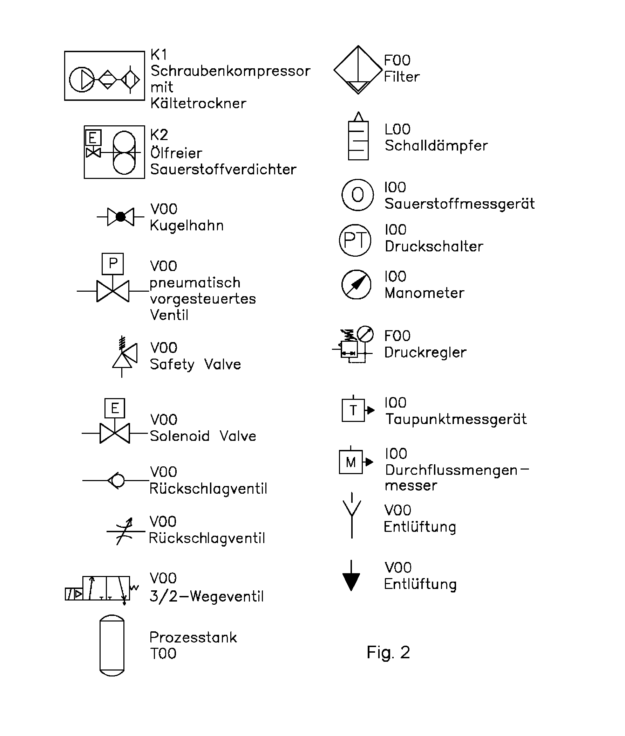

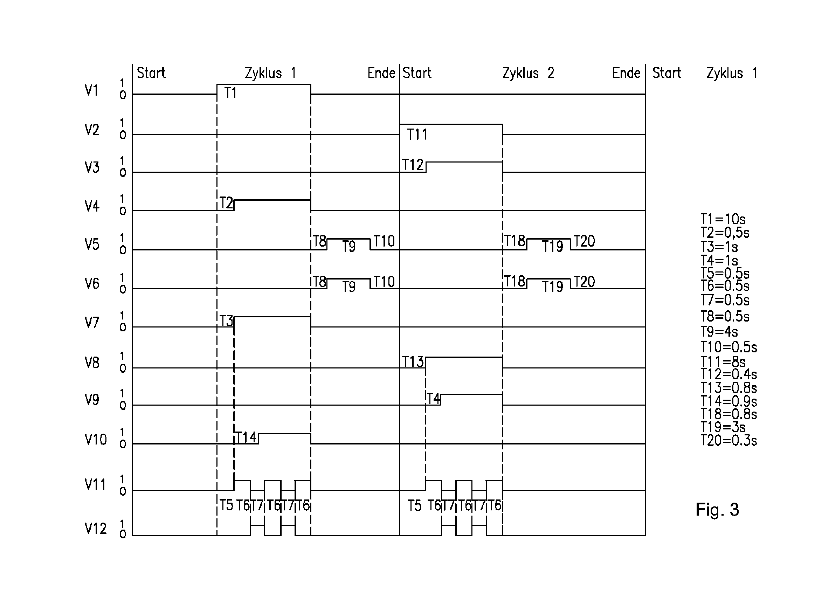

An Hand der beiliegenden Zeichnungen wird die Erfindung näher erläutert. Es zeigt: Fig. 1 eine erfindungsgemäße Anlage; Fig. 2 eine Zeichenerklärung der Symbole von Fig. 1; und Fig. 3 ein Zeitdiagramm, gemäß welchem die Anlage von Fig. 1 betrieben wird.

### Beschreibung der Ausführungsarten

Zunächst wird durch einen Schraubenkompressor K1 Umgebungsluft angesaugt und komprimiert. Dieser Schraubenkompressor K1 beinhaltet einen Kältetrockner, durch den die Luft entfeuchtet wird. Durch die folgenden Abscheider F1 und F2 wird Kondenswasser entfernt. Die getrocknete Luft gelangt dann in einen Zwischenspeicher F3. Vom Zwischenspeicher F3 gelangt die Luft über ein Taupunktmessgerät I12 und einem weiteren Abscheider F4 in den Druckluftspeicher T3. Dieser ist mit einem Manometer I1, einem Druckschalter I2 und einem Sicherheitsventil V19 versehen.

Um die Anlage drucklos machen zu können, ist der Schraubenkompressor K1 mit einem pneumatisch gesteuerten Ventil V1.18 und der Druckluftspeicher T3 mit einem Kugelhahn V16 versehen.

Im Betrieb ist der Kugelhahn V16 geschlossen, die Druckluft wird über ein im Betrieb offenen Kugelhahn V17 in zu den weiteren Anlagenteilen geleitet. Diese Druckluft wird einerseits zur Anlagensteuerung verwendet, andererseits dient sie als Rohstoff für die Sauerstoffproduktion.

Zwecks Anlagensteuerung gelangt die Druckluft zu den Wegeventilen V1-V10 und V18 sowie zu den Wegeventilen V11, V12, V31 und V32. Diese Wegeventile dienen zur Steuerung von pneumatisch gesteuerten Ventilen. Die pneumatisch gesteuerten Ventile haben im Wesentlichen das gleiche Bezugszeichen wie die Wegeventile, durch welche sie angesteuert werden, jedoch ist vor der Zahl "1." eingefügt. Das Wegeventil V18 steuert daher das oben erwähnte pneumatisch gesteuerte Ventil V1.18 an.

Die Wegeventile können jeweils unabhängig die Druckluft weiterleiten oder absperren, wodurch das zugehörige pneumatisch gesteuerte Ventil geöffnet oder geschlossen wird. Zu welchen Zeiten sie weiterleiten bzw. absperren, ist aus Fig. 3 ersichtlich.

Die Druckluft, die als Rohstoff für die Sauerstoffproduktion dient, gelangt über ein Druckreduzierventil F5 mit anschließendem Filter zu den beiden pneumatisch gesteuerten Ventilen V1.1 und V1.2. Diese dienen als Eingangsventile für die Druckwechseladsorption.

Das Prinzip der Druckwechseladsorption besteht darin, dass Druckluft (die hauptsächlich aus Stickstoff und Sauerstoff besteht) mit einem Adsorbens in Kontakt gebracht wird, welches Stickstoff wesentlich stärker adsorbiert als Sauerstoff. Das Adsorbens befindet sich in Festbettreaktoren T1 bzw. T2. Leitet man die Druckluft durch das Adsorbens eines Festbettreaktors, so wird der Stickstoff gebunden und am Ausgang erhält man relativ reinen Sauerstoff. Dies geht natürlich nur so lange, bis das Adsorbens erschöpft ist. Sobald man sich diesem Zustand nähert, bringt man den entsprechenden Festbettreaktor auf Atmosphärendruck, wodurch sich der Stickstoff vom Adsorbens löst ("Regeneration" des Adsorbens). Um eine relativ konstante Sauerstoffproduktion zu gewährleisten, verwendet man zwei Festbettreaktoren T1 und T2; während ein Festbettreaktor Sauerstoff liefert, wird der andere regeneriert.

Die Schaltung sieht im Detail wie folgt aus:

Es sind zwei Festbettreaktoren T1, T2 vorgesehen, die jeweils mit einem Sicherheitsventil V20, V21 und Manometern I3, I4 versehen sind. Die Druckluft kann über die bereits erwähnten Ventile V1.1 und V1.2 jeweils einem Festbettreaktor T1 bzw. T2 zugeführt werden. Zur Druckentlastung sind Ventile V1.3 und V1.4 vorgesehen, durch welche der Festbettreaktor T1 bzw. T2 über einen Schalldämpfer L1 mit der Umgebungsluft verbunden werden kann. Weiters sind insgesamt drei Ventile V1.15, V1.5 und V1.6 vorgesehen, mit denen die beiden Festbettreaktoren T1, T2 eingangsseitig und ausgangsseitig verbunden werden können. Diese Ventile werden immer gleichzeitig angesteuert. Ausgangsseitig sind zwei Ventile V1.5 und V1.6 parallel geschaltet, weil diese Ventile in den beiden möglichen Strömungsrichtungen oft einen erheblich anderen Strömungswiederstand haben; durch den gegensinnigen Einbau der beiden parallel geschalteten Ventile V1.5 und V1.6 wird dies ausgeglichen.

In den Ausgangsleitungen der Festbettreaktoren T1 und T2 sind Ventile V1.7 bzw. V1.8 vorgesehen. Hinter diesen Ventilen befinden sich zwei einstellbare Drosselventile V13 und V14, die parallel durchströmt werden können. Das Drosselventil V14 führt zur folgenden Reinigungsstufe, das Drosselventil V13 führt über die Ventile V1.9 bzw. V1.10 zum Ausgang des Festbettreaktors T1 bzw. T2.

Zum Verständnis der Druckwechseladsorption muss Fig. 1 zusammen mit Fig. 3 betrachtet werden. Zunächst sind alle Ventile geschlossen. Als erstes wird V1.1 geöffnet, Druckluft strömt in den Festbettreaktor T1. Sobald sich genug Druck aufgebaut hat (nach 1 s), öffnet V1.7, sodass Sauerstoff aus dem Festbettreaktor T1 über das Drosselventil V14 zur nächsten Reinigungsstufe strömt. In der Zwischenzeit hat auch schon V1.4 geöffnet, sodass der Festbettreaktor T2 eingangsseitig mit der Umgebungsluft verbunden ist (d.h. der Überdruck wird abgebaut, der adsorbierte Stickstoff wird freigesetzt und strömt ab). Sobald der Überdruck abgebaut ist (nach 0,9 s) öffnet V1.10, sodass Sauerstoff vom Festbettreaktor T1 über das Drosselventil V13 ausgangsseitig in den Festbettreaktor T2 strömt. Da der Festbettreaktor T2 eingangsseitig mit der Umgebungsluft verbunden ist, wird er mit Sauerstoff gefüllt, sodass der Stickstoff verdrängt wird. Dies erhöht die Reinheit des beim nächsten Zyklus produzierten Sauerstoffs. Durch die beiden Drosselventile V13 und V14 kann der Anteil des Sauerstoffs, der in den jeweils anderen Festbettreaktor strömt, eingestellt werden. Wenn der andere Festbettreaktor (also hier T2) mit Sauerstoff gefüllt ist, werden alle Ventile geschlossen.

Kurz darauf (nach 0,5 s) werden die Ventile V1.15, V1.5 und V1.6 geöffnet. Dadurch erfolgt ein Druckausgleich zwischen den beiden Festbettreaktoren T1 und T2. Der Festbettreaktor T2 gerät dadurch bereits unter Überdruck, sodass im nächsten Zyklus weniger Druckluft benötigt wird, um einen vorgegebenen Druck zu erreichen. Außerdem ist das Gas bereits sauerstoffreicher als Luft, was sich positiv auf die Reinheit des Gases am Ausgang auswirkt.

Nun wiederholt sich diese Abfolge genau spiegelgleich, d.h. anstelle des Festbettreaktors T1 und seiner Ventile treten der Festbettreaktor T2 und seine Ventile und umgekehrt:

Nun wird V1.2 geöffnet, Druckluft strömt in den Festbettreaktor T2 (der bereits unter leichtem Überdruck steht). Sobald sich genug Druck aufgebaut hat (nach 1 s), öffnet V1.8, sodass Sauerstoff aus dem Festbettreaktor T2 über das Drosselventil V14 zur nächsten Reinigungsstufe strömt. In der Zwischenzeit hat auch schon V1.3 geöffnet, sodass der Festbettreaktor T1 eingangsseitig mit der Umgebungsluft verbunden ist (d.h. der Überdruck wird abgebaut, der adsorbierte Stickstoff wird freigesetzt und strömt ab). Sobald der Überdruck abgebaut ist (nach 0,9 s) öffnet V1.9, sodass Sauerstoff vom Festbettreaktor T2 über das Drosselventil V13 ausgangsseitig in den Festbettreaktor T1 strömt. Da der Festbettreaktor T1 eingangsseitig mit der Umgebungsluft verbunden ist, wird er mit Sauerstoff gefüllt, sodass der Stickstoff verdrängt wird. Dies erhöht die Reinheit des beim nächsten Zyklus produzierten Sauerstoffs. Wenn der Festbettreaktor T1 mit Sauerstoff gefüllt ist, werden alle Ventile geschlossen.

Kurz darauf (nach 0,5 s) werden die Ventile V1.15, V1.5 und V1.6 geöffnet. Dadurch erfolgt ein Druckausgleich zwischen den beiden Festbettreaktoren T1 und T2. Der Festbettreaktor T1 gerät dadurch bereits unter Überdruck, sodass im nächsten Zyklus weniger Druckluft benötigt wird, um einen vorgegebenen Druck zu erreichen.

Nach der Druckwechseladsorption, also nach dem Drosselventil V14, folgt ein Membranfilter F6. Dieses Membranfilter F6 hat eine hohe Permeabilität für Sauerstoff und eine geringe Permeabilität für andere Gase. Dieses Membranfilter F6 hat zwei Ausgänge, einen für das Permeat (also für den Sauerstoff) und einen für das Retentat (also die anderen Gase). Der Ausgang für das Retentat ist über ein druckgesteuertes Ventil V1.11 und ein Drosselventil V29 mit der Umgebungsluft verbunden. Der Ausgang für das Permeat ist über ein druckgesteuertes Ventil V1.12, einen Durchflussmengenmesser 15, ein Sauerstoffmessgerät I8, ein druckgesteuertes Ventil V1.13 und ein Rückschlagventil V15 mit einem Druckbehälter T4 verbunden. Parallel zum Ventil V1.13 ist ein Ventil V1.14 geschaltet, das eine Verbindung zur Umgebungsluft herstellen kann.

Das Membranfilter F6 wird wie folgt verwendet: In den Zeiten, in denen V.17 oder V.18 geöffnet ist, also die Druckwechseladsorption Sauerstoff liefert, werden V1.11 und V1.12 abwechselnd angesteuert, jeweils für 0,5 s. Zunächst wird V1.11 geöffnet, damit das Membranfilter F6 mit dem sauerstoffreichen Gas der Druckwechseladsorption beschickt wird; dann wird V1.11 geschlossen und V1.12 geöffnet. Nun steigt der Druck im Membranfilter F6, und Sauerstoff diffundiert durch die Membrane. Bevor nun der Sauerstoffgehalt vor der Membrane zu stark sinkt, wird V1.12 wieder geschlossen und V1.11 geöffnet, sodass das Membranfilter F6 mit dem sauerstoffreichen Gas der Druckwechseladsorption neuerlich beschickt wird. Dies wiederholt sich so lange, bis das Ventil V1.17 oder V1.18 schließt.

Die Ansteuerung der Ventile V1.13 und V1.14 erfolgt auf Basis der Messwerte des Sauerstoffmessgeräts I8. Wenn die Sauerstoffreinheit einen vorgegebenen Wert überschreitet, wird V1.13 geöffnet und V1.14 geschlossen, das Gas gelangt in den Druckbehälter T4; andernfalls wird V1.13 geschlossen und V1.14 geöffnet, das Gas wird verworfen und in die Umgebungsluft abgeleitet. Dies stellt sicher, dass die Sauerstoffreinheit im Druckbehälter T4 immer den vorgegebenen Wert überschreitet.

Der Druckbehälter T4 ist - ähnlich wie der Druckluftspeicher T3 - mit einem Manometer I6, einem Druckschalter I7 und einem Sicherheitsventil V22 versehen. Um die Anlage drucklos machen zu können, ist der Druckbehälter T4 mit einem Kugelhahn V23 versehen.

Das Gas, das im Druckbehälter T4 gesammelt wird, hat relativ geringen Druck. Je nach Anwendung kann dieses Gas direkt verwendet werden, oder aber man kann es auch noch komprimieren, falls dies notwendig sein sollte. Zu diesem Zweck folgt auf den Druckbehälter T4 über einen Kugelhahn V24 ein ölfreier Sauerstoffverdichter K2, der das komprimierte Gas über ein Rückschlagventil V25 in einen Druckspeicher T5 einspeist. Auch dieser ist mit einem Manometer I9, einem Druckschalter I10 und einem Sicherheitsventil V30 versehen. Um ihn drucklos machen zu können, ist ein Kugelhahn V26 vorgesehen. Vom Druckspeicher T5 kann der Sauerstoff über ein Filter F7, das Magnetventil V28, den Durchflussmengenmesser I11 und einen Druckregler F8 entnommen werden. Wenn man einen Anlagenstillstand überbrücken möchte, kann man über ein Magnetventil V27 Sauerstoff aus einer Backup-Anlage einspeisen.

## Patentansprüche

1. Verfahren zur Herstellung von Sauerstoff, wobei eine PSA-Stufe (Druckwechsel-Adsorptionsstufe) oder eine VPSA-Stufe (Vakuum-Druckwechsel-Adsorptionsstufe) von einem Membranfilter gefolgt wird, **dadurch gekennzeichnet, dass** zur Herstellung von Sauerstoff mit mindestens 99%, vorzugsweise mindestens 99,5% Reinheit zunächst mit der PSA- bzw. VPSA-Stufe Sauerstoff mit einer Reinheit von mindestens 96%, vorzugsweise mindestens 97% erzeugt und in nur einem Membranfilter weiter gereinigt wird, wobei der Druck zum Speisen des Membranfilters von der PSA- bzw. VPSA-Stufe stammt.

2. Verfahren nach Anspruch 1, **dadurch gekennzeichnet, dass** bei der Druckwechsel-Adsorptionsstufe jeder Festbettreaktor zunächst mit dem Abgas des anderen Festbettreaktors beschickt wird, bis Druckausgleich herrscht, wonach der eine Festbettreaktor weiter mit Luft beschickt wird und das verbleibende Abgas des anderen Festbettreaktors abgelassen wird.

3. Verfahren nach Anspruch 1 oder 2, **dadurch gekennzeichnet, dass** in den Zeitintervallen, in denen die PSA- bzw. VPSA-Stufe Sauerstoff liefert, der Permeatausgang und der Retentatausgang des Membranfilters abwechselnd freigeschaltet werden.

4. Verfahren nach einem der Ansprüche 1 bis 3, **dadurch gekennzeichnet, dass** der Sauerstoffgehalt nach dem Permeatausgang gemessen wird und das Permeat bei Erreichen oder Überschreiten eines vorgegebenen Grenzwertes in einen Sammelbehälter geleitet wird und bei Unterschreiten des vorgegebenen Grenzwertes verworfen wird.
